# EUROPÄISCHE PATENTSCHRIFT

(11) **EP 2 117 103 B1**
(45) Veröffentlichungstag und Bekanntmachung des Hinweises auf die Patenterteilung: **14.07.2010**
(21) Anmeldenummer: 08008718.2
(22) Anmeldetag: 09.05.2008
(51) Int. Cl.: H02K 29/08, H02P 6/16

(54) **Integrierte Schaltung zum Ansteuern eines Elektromotors**
Integrated switch for controlling an electromotor
Commutateur intégré pour la commande d'un moteur électrique

(43) Veröffentlichungstag der Anmeldung: 11.11.2009
(73) Patentinhaber: Micronas GmbH, 79108 Freiburg i. Br. (DE)
(72) Erfinder: Franke, Jörg, Dipl.-Ing., 79117 Freiburg (DE); Heberle, Klaus, 79312 Emmendingen (DE)
(74) Vertreter: Huwer, Andreas

(56) Entgegenhaltungen:
- GB-A- 2 070 354
- JP-A- 58 036 160
- US-A- 3 522 494
- US-A- 4 074 173
- US-B1- 6 373 241

## Beschreibung

Die Erfindung betrifft eine integrierte Schaltung zum Ansteuern eines Elektromotors, der ein eine Wicklung aufweisendes Primärteil und ein relativ dazu bewegbares, über einen Luftspalt damit zusammenwirkendes permanentmagnetisches Sekundärteil aufweist, mit einem Halbleitersubstrat, in das ein Mikrocontroller und/oder eine Vorstufe zum Ansteuern der Wicklung des Elektromotors integriert ist.

Eine derartige, in einen ersten Halbleiterchip integrierte Schaltung ist unter der Typenbezeichnung 908E625 beim Hersteller Freescale^{™} Semiconductor, Inc., Arizona, USA erhältlich. Sie hat ein Halbleitersubstrat, in das ein Mikrocontroller integriert ist, der einen programmierbaren, nichtflüchtigen Speicher, einen Zeitgeber, ein Kommunikationsschnittstelle, einen Analog-Digital-Konverter und eine serielle/parallele Schnittstelle umfasst. Der erste Halbleiterchip ist zusammen mit einem zweiten Halbleiterchip, in den eine Vorstufe und Endstufentransistoren für drei Halbbrücken zum Ansteuern einer dreiphasigen Wicklung eines Elektromotors integriert sind, in einem Kunststoffgeäuse angeordnet. Zur elektrischen Kontaktierung sind an dem Kunststoffgehäuse Anschlusskontakte vorgesehen, die über Bonddrähte mit Anschlussstellen der Halbleiterchips verbunden sind. Drei Anschlusskontakte sind mit den drei Halbbrücken verbunden. An diesen Anschlusskontakten werden die drei Phasenanschlüsse der am Primärteil des Elektromotors angeordneten Wicklung angeschlossen. Ein vierter Anschlusskontakt wird mit dem Sternpunkt der Wicklung verbunden. Der Elektromotor hat weist drei Hallsensoren auf, die im Abstand von 120° am Primärteil angeordnet sind und das magnetische Feld der an den Hallsensoren vorbeiziehenden permanentmagnetischen Pole des Sekundärteils detektieren. Die Messsignalausgänge der Hallsensoren sind jeweils mit einem Ihnen zugeordneten Anschlusskontakt des ersten Halbleiterchips verbunden. Mit Hilfe des Mikrocontrollers wird anhand der Hallsensor-Messsignale die jeweilige Lage des Sekundärteils relativ zum Primärteil ermittelt und die Wicklung wird in Abhängigkeit von der Lage über die Vorstufe und die Halbbrücken angesteuert, um eine Relativbewegung zwischen Primär- und Sekundärteil zu erzeugen. Der den Halbleiterchip aufweisende elektrische Antrieb ist jedoch noch vergleichsweise aufwändig und teuer.

Es besteht deshalb die Aufgabe, eine Integrierte Schaltung zu schaffen, die einen kostengünstigen und robusten elektrischen Antrieb mit geringen Abmessungen ermöglicht.

Diese Aufgabe wird dadurch gelöst, dass zur Erfassung der Lage des permanentmagnetischen Sekundärteils in das Halbleitersubstrat mindestens zwei mit ihren Messachsen quer zueinander angeordnete Magnetfeldsensoren integriert sind.

In vorteilhafter Weise sind die Magnetfeldsensoren dadurch in ihrer Lage exakt relativ zueinander positioniert und bei der Fertigung des Elektromotors vereinfacht sich der Montage- und Verkabelungsaufwand erheblich. Außerdem wird durch integrierte Schaltung ein robuster und kompakte Antrieb ermöglicht. Die Magnetfeldsensoren können Hallsensoren, magnetoresistive Sensoren oder giantmagnetoresistive Sensoren sein.

Bei einer bevorzugten Ausgestaltung der Erfindung sind die Magnetfeldsensoren vertikale oder schräge Hallsensoren. Dabei sind die Magnetfeldsensoren mit ihren Messachsen vorzugsweise rechtwinklig zueinander angeordnet.

Vorteilhaft ist, wenn mindestens ein Magnetfeldsensor ein vertikaler oder schräger Hallsensor und wenigstens ein weiterer Magnetfeldsensor ein horizontaler Hallsensor ist Der Magnetfeldsensor kann dann in einer anderen Ausrichtung an dem Elektromotor positioniert werden, was einen noch kompakteren elektrischen Antrieb ermöglicht

Bei einer anderen vorteilhaften Ausgestaltung der Erfindung sind benachbart zu mindestens einem Magnetfeldsensor auf und/oder im Halbleitersubstrat Ablenkmittel für den magnetischen Fluss des permanentmagnetischen Sekundärteils vorgesehen. Die Ablenkmittel können eine magnetisch leitfähige Schicht aufweisen, die den magnetischen Fluss in eine andere Richtung ablenkt Dadurch ist es möglich, mit Hallsensoren, die in derselben und/oder in parallel zueinander verlaufenden Ebenen angeordnet sind, Magnetfelder zu messen, die in quer und Insbesondere rechtwinklig zueinander verlaufenden Richtungen angeordnet sind, beispielsweise in x-, y- und z-Richtung.

Bei einer zweckmäßigen Ausführungsform der Erfindung enthält der Mikrocontroller einen Lageregler, einen Geschwindigkeitsregler und/oder einen Drehmomentregler für den Elektromotor. Der Regler wird dabei vorzugsweise über ein entsprechendes Betriebsprogramm sofwaremäßig im Mikrocontroller realisiert. Das Betriebsprogramm kann in einem nicht flüchtigen Programmspeicher abgelegt sein. Der aus der integrierten Schaltung und dem Elektromotor gebildete elektrische Antrieb ermöglicht dann noch kompaktere Abmessungen. Durch entsprechendes Programmieren des Programmspeichers kann die integrierte Schaltung auf einfache Weise an unterschiedliche Elektromotoren angepasst werden.

Vorteilhaft ist, wenn der Mikrocontroller mit Messsignalausgängen der Magnetfeldsensoren verbundene Eingänge aufweist, wenn der Mikrocontroller zum Erzeugen einer der Anzahl der Magnetfeldsensoren entsprechenden Anzahl, zueinander phasenverschobener vorzugsweise sinusförmiger Signale ausgebildet ist, und wenn der Mikrocontroller zum Einstellen der Phasenlage dieser Signale einen Datenspelcher aufweist, in dem Stützstellen abgelegt sind, die jeweils für jeden Magnetfeldsensor mindestens einen Messsignalwert einem Wert für die Phasenlage der Signale zuordnen. Mit Hilfe der im Datenspeicher abgelegten Stützstellen ist es sogar möglich, Messfehler, die durch eine durch Montage- und/oder Fertigungstoleranzen verursachte exzentrische Anordnung der rotierenden permanentmagnetischen Pole zur Schnittlinie der Erstreckungsebenen der Hallsensoren verursacht sind, zu kompensieren. Die Stützstellen können in einem einen flüchtigen Speicherbereich des Datenspeichers in Form von Wertekombinationen, jeweils bestehend aus einem Referenzmesswert für jeden Magnetfeldsensor und mindestens einem Wert für die Phasenlage abgelegt sein. Es ist aber auch möglich, dass die Stützstellen in Form einer Kennlinie und/oder eines Kennfelds in dem Datenspeicher abgelegt sind, beispielsweise als mathematisch Funktion, für die eine Berechnungsvorschrift in Form eines Programms für den Mikrocontroller und ggf. Koeffizienten abgespeichert sind.

Bei einer bevorzugten Ausgestaltung der Erfindung weist die Integrierte Schaltung verstellbare Abgleichmittel für die Magnetfeldsensoren auf, wobei der Mikrocontroller einen Referenzwertspeicher aufweist, in dem Referenzwerte für die Messsignale abgelegt sind, wobei der Mikrocontroller in einen Betriebsmodus und einen Abgleichmodus bringbar ist, wobei im Abgleichmodus der Elektromotor mit Hilfe des Mikrocontrollers in mindestens eine den Referenzwerten zugeordnete Referenzposition bringbar ist, und wobei im Abgleichmodus die Abgleichmittel derart mit dem Mikrocontroller in Steuerverbindung stehen, dass die an den Messsignalausgängen der Magnetfeldsensoren anliegenden Messsignale im Wesentlichen mit den Referenzwerten übereinstimmen. Die integrierte Schaltung kann dann nach der Montage am Elektromotor vor Ort abgeglichen werden, um Fertigungstoleranzen des Elektromotors, wie z.B. Toleranzen in den Abmessungen und/oder der Magnetisierung des permanentmagnetischen Sekundärteils zu kompensieren. Durch den Abgleich können außerdem Fertigungsfioleranzen der integrierten Schaltung kompensiert werden. Gegebenenfalls ist es sogar möglich, den Abgleich während des Betriebs des Elektromotors beispielsweise in vorbestimmten Zeitabständen und/oder aufgrund eines an den Mikrocontroller übermittelten externen Befehls zu wiederholen, um altersbedingte und/oder durch geänderte Umgebungsbedingungen verursachte Veränderungen des Elektromotors und/oder der integrierten Schaltung zu kompensieren. Gegebenenfalls kann bei dem Abgleich eine Plausibilitätsprüfung durchgeführt werden, bei der die Abglelchmlttel nur dann verstellt werden, wenn die für die Abgleichmittel ermittelten Einstellwerte plausibel sind. Bei der Fertigung der Integrierten Schaltung kann gegebenenfalls in einer Halbleiterfabrik eine Voreinstellung der Abgleichmittel vorgenommen werden, um Toleranzen in der integrierten Schaltung auszugleichen.

Die Abgleichmittel weisen bevorzugt Mittel zum Einstellen der Empfindlichkeit der Magnetfeldsensoren und/oder eines Offsets der Messsignale der Magnetfeldsensoren auf. Die Messsignale der Magnetfeldsensoren können dadurch mit großer Präzision justiert werden.

Vorteilhaft ist, wenn im Referenzwertspeicher Referenzwerte für unterschiedliche Störgrößenwerte, insbesondere Temperaturwerte, abgelegt sind, wenn die Integrierte Schaltung mindestens einen Sensor zur Erfassung eines Störgrößenmesswerts aufweist, und wenn der Sensor derart mit dem Referenzwertspeicher und/oder dem Mikrocontroller verbunden ist, dass im Abgleichmodus die Messsignale der Magnetfeldsensoren mit den dem betreffenden Störgrößenmesswert zugeordneten Referenzwerten abgleichbar sind. Dadurch können Messtoleranzen in den Ausgangssignalen der Magnetfeldsensoren, die durch Veränderungen von auf die Integrierte Schaltung und/oder den Elektromotor einwirkenden physikalischen Störgrößen verursacht sind, vermieden oder zumindest reduziert werden.

Die erfindungsgemäße integrierte Schaltung ist bevorzugt ein Teil eines elektrischen Antriebs, der einen Elektromotor hat, der ein eine Wicklung aufwelsendes Primärtell und ein über einen Luftspalt damit zusammenwirkendes, relativ zu dem Primärteil um eine Rotationsachse verdrehbares permanentmagnetisches Sekundärteil aufweist, wobei die Integrierte Schaltung mit ihrer Chipebene quer und vorzugsweise normal zur Rotationsachse des Sekundärteils angeordnet ist. Die integrierte Schaltung ist in diesem Fall bevorzugt an der Stirnseite des Elektromotors angeordnet. Der Elektromotor kann insbesondere ein bürstenloser Gleichstrommotor, ein Gleichstrommotor mit Bürsten, ein Wechsel- bzw. Drehstrommotor oder ein Schrittmotor sein.

Vorteilhaft ist, wenn sich ein erster Hallsensor in einer ersten Ebene und ein zweiter Hallsensor in einer quer dazu verlaufenden zweiten Ebene erstreckt, und wenn die Rotationsachse in der Schnittlinie der Ebenen der Hallsensoren oder der geraden Verlängerung der Schnittlinie angeordnet ist. Dabei ist das Halbleitersubstrat der integrierten Schaltung vorzugsweise mittig und mit seiner Chipebene normal zur Rotationsachse des Elektromotors angeordnet.

Bei einer anderen zweckmäßigen Ausführungsform der Erfindung erstreckt sich ein erster Hallsensor in einer ersten Ebene und ein zweiter Hallsensor in einer quer dazu verlaufenden zweiten Ebene, wobei die Rotationsachse parallel zu der Schnittlinie der Erstreckungsebenen der Hallsensoren oder der geraden Verlängerung der Schnittlinie angeordnet ist. Das die integrierte Schaltung enthaltende Bauelement kann also auch seitlich neben der Rotationsachse des Elektromotors angeordnet sein. Somit brauchen auf der Rotationsachse keine elektrischen Teile angeordnet zu sein, so dass der dort befindliche Bauraum für eine Antriebswelle genutzt werden kann.

Die erfindungsgemäße Integrierte Schaltung kann auch ein Teil eines elektrischen Antriebs sein, der einen Elektromotor hat, der ein eine Wicklung aufweisendes Primärteil und ein über einen Luftspalt damit zusammenwirkendes, relativ zu dem Primärteil um eine Rotationsachse verdrehbares permanentmagnetisches Sekundärtell aufweist, wobei die Integrierte Schaltung mit ihrer Chipebene parallel zur Rotationsachse des Sekundärteils angeordnet ist. Die integrierte Schaltung kann dann Insbesondere am Außenumfang des Elektromotors angeordnet sein, um eine kurze Bauform des die integrierte Schaltung und den Elektromotor aufweisenden elektrischen Antriebs zu ermöglichen.

Bei einer zweckmäßigen Ausgestaltung der Erfindung weist das permanentmagnetische Primärteil mehrere, in Bewegungsrichtung der Relativbewegung zwischen Primär- und Sekundärtell zueinander versetzte erste permanentmagnetische Pole auf, wobei das Primärtell mit einem Magnetrad in Antriebsverbindung steht, das in Umfangsrichtung zueinander versetzte zweite permanentmagnetische Pole aufweist die mit den Magnetfeldsensoren magnetisch zusammenwirken. Die Messgenauigkeit für die Bestimmung der Lage des Sekundärteils relativ zum Primärtell ist dabei im Wesentlichen durch die Anzahl der Pole des Magnetrads bestimmt. Diese kann bei Bedarf größer oder kleiner gewählt sein als die Anzahl der permanentmagnetischen Pole des Elektromotors.

Bei einer anderen vorteilhaften Ausgestaltung der Erfindung steht das Primärteil mit einem Zahnrad in Antriebsverbindung, das derart im magnetischen Fluss eines Magneten angeordnet ist, dass der magnetischen Fluss durch die des Zahnrads und die Magnetfeldsensoren verläuft. Dabei sind die Zähne bevorzugt den Magnetfeldsensoren zugewandt.

Erwähnt werden soll noch, dass aus den Messsignalen mindestens zweier Magnetfeldsensoren ein Differenzsignal gebildet werden kann. Das kann beispielsweise dadurch erreicht werden, dass die die Magnetfeldsensoren geeignet in Reihe geschaltet werden. Dadurch wird die Messung unempfindlicher gegenüber Störungen, wie z.B. einer Abweichung des Abstands der Magnetfeldsensoren von einem das Magnetfeld erzeugenden Permanentmagneten.

Nachfolgend sind Ausführungsbelsplele der Erfindung anhand der Zeichnung näher erläutert. Es zeigt
- Fig.1: ein Blockschaltbild einer integrierte Schaltung zum Ansteuern eines Elektromotors, wobei die Integrierte Schaltung über eine Endstufe mit der Wicklung des Elektromotors sowie mit weiteren externen elektrischen Bauelemente verbunden ist,
- Fig. 2: eine erste Messeinrichtung, die ein erstes Ausführungsbeispiel der integrierten Schaltung und eine daran angeordnetes Magnetrad auf- weist,
- Fig. 3: eine graphische Darstellung der Ausgangssignale von Hallsensoren, die Bestandteil der integrierten Schaltung sind, wobei auf der Abszisse der Drehwinkel α einer Motorwelle und auf der Ordinate das Messsignal Sₓ, Sy aufgetragen ist,
- Fig. 4: eine zweite Messeinrichtung, die ein zweites Ausführungsbeispiel der integrierten Schaltung und eine daran angeordnetes Magnetrad auf- weist, und
- Fig. 5: eine dritte Messeinrichtung, die ein drittes Ausführungsbeispiel der integrierten Schaltung und eine daran angeordnetes Magnetrad auf- weist.

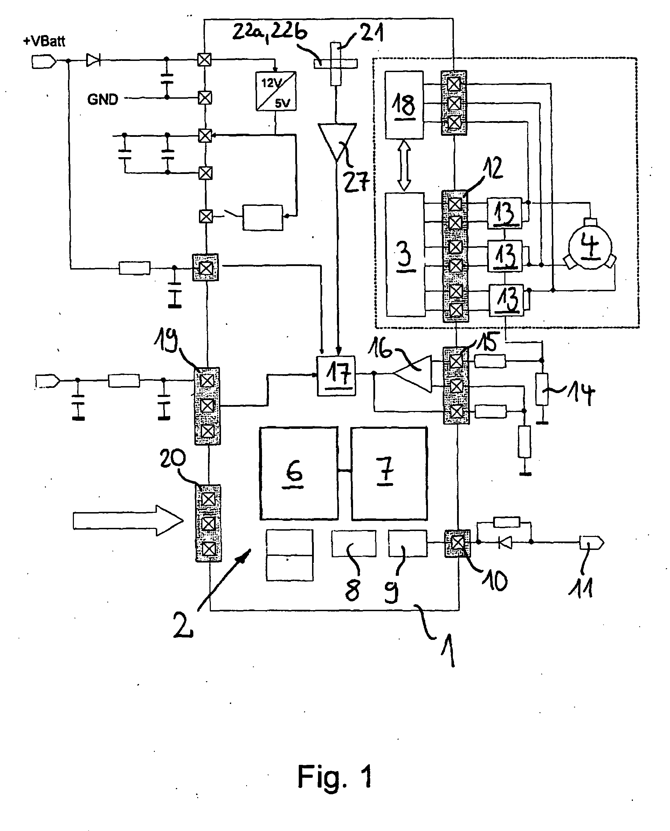

Eine in Fig. 1 im Ganzen mit 1 bezeichnete integrierte Schaltung weist ein monolithisches Halbleitersubstrat auf, in das ein Mikrocontroller 2 und eine Vorstufe 3 zum Ansteuern der Wicklung des Elektromotors 4 integriert sind. Die Integrierte Schaltung 1 ist mit Hilfe eines CMOS-Prozesses hergestellt und kann unipolare, bipolare und passive Bauelemente umfassen.

Der Elektromotor 4 ist als bürstenloser Gleichstrommotor ausgestaltet, der ein Primärteil mit der daran angeordneten Wicklung und ein permanentmagnetisches Sekundärteil aufweist, das um eine Rotationsachse 5 verdrehbar am Primärteil gelagert ist. Das Sekundärteil hat an seinem Außenumfang eine Reihe von permanentmagnetlschen Polen, die in Umfangsrichtung zueinander versetzt sind und über einen luftspalt mit der Wicklung zusammenwirken. Es sind aber auch andere Ausgestaltungen des Elektromotors 4 denkbar. So kann der Elektromotor 4 auch als Außenläufer oder Scheibenläufer ausgestaltet sein.

In Fig. 1 ist erkennbar, dass der Mikrocontroller 2 einen Mikroprozessor 6 und einen damit verbundenen Speicher 7 aufweist, in dem ein Betriebsprogramm für den Mikroprozessor 6 und Daten abgelegt sind Der Speicher 7 weist einen flüchtigen Speicherbereich und einen nichtflüchtigen, programmierbaren Speicherbereich auf. Der Mikrocontroller 2 hat außerdem einen Oszillator 8 zur Erzeugung eines Systemtakts. Ferner weist der Mikrocontroller 2 eine serielle Schnittstelle 9 auf, die über einen ersten elektrischen Anschluss 10 mit einem Bus 11 verbunden ist.

In Fig. 1 ist außerdem erkennbar, dass die integrierte Schaltung 1 zweite elektrische Anschlüsse 12 aufweist, über welche die Vorstufe 3 mit Eingängen einer Endstufe verbunden ist. Die Endstufe hat mehrere Leistungstransistoren aufweisende Halbbrücken 13, die mit Wicklungsanschlüssen des Elektromotors 4 und einem Shunt 14 verbunden sind. Zum Messen des Wicklungsstroms des Elektromotors 4 ist der Shunt 14 über einen Widerstand mit einem dritten elektrischen Anschluss 15 der integrierten Schaltung 1 verbunden, der zu einem ersten Messverstärker 16 führt, der mit seinem Ausgang mit einem ersten Eingang eines in das Halbleitersubstrat integrierten Analog-Digital-Konverters 17 verbunden ist.

Die Wicklungsanschlüsse sind außerdem mit dritten elektrischen Anschlüssen 12 der integrierten Schaltung 1 verbunden, die an einer in das Hableitersubstrat integrierten Schutzschaltung 18 angeschlossen sind. Die Schutzschaltung 18 wirkt derart mit der Vorstufe 3 zusammen, dass bei einem unzulässigen Betriebszustand der Halbbrücken 13 das Ansteuersignal der Halbbrücken-Transistoren gesperrt wird. Ferner hat die integrierte Schaltung 1 Digitaleingänge 19, 20, die mit dem Mikroprozessor 6 und dem Analog-Digital-Konverter 17 verbunden sind.

Zur Erfassung der Lage des permanentmagnetischen Sekundärteils relativ zum Primärteil ist die integrierte Schaltung 1 am Primärteil angeordnet in das Halbleitersubstrat der Integrierten Schaltung 1 sind zwei mit ihren Messachsen orthogonal zueinander angeordnete Magnetfeldsensoren integriert, die als Hall-Sensoren 21, 22a, 22b ausgebildet sind. Die Hall-Sensoren 21, 22a, 22b sind im magnetischen Feld eines um die Rotationsachse 5 drehbar gelagerten Rundmagneten 23 angeordnet, der auf einer mit dem Sekundädrkeil des Elektromotors 4 in Antriebsverbindung stehenden Motorwelle 24 angeordnet ist.

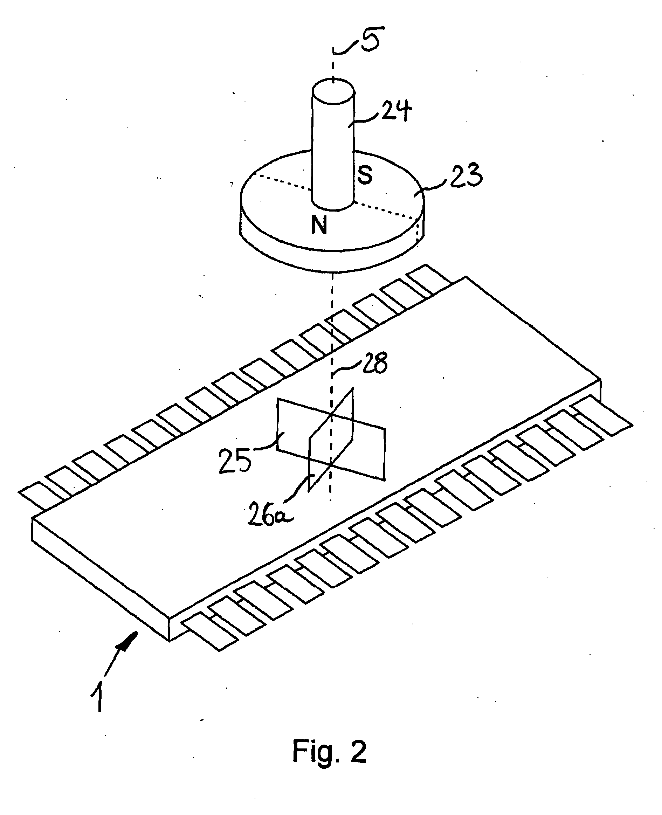

Bei dem in Fig. 2 gezeigten Ausführungsbeispiel sind die beiden Hall-Sensoren 21, 22a als vertikal Hall-Sensoren ausgestaltet, die mit ihren Ebenen 25, 26a normal zueinander und normal zur Chipebene des Halbleitersubstrats angeordnet sind. Deutlich ist erkennbar, dass die Rotationsachse 5 des Elektromotors 4 in der Schnittlinie 28 dieser Ebenen 25 angeordnet ist. Die Messrichtungen der Hall-Sensoren 21, 22a verlaufen jeweils orthogonal zu den Ebenen 25, 26a, in denen sich die Hall-Sensoren 21, 22a erstrecken. Messsignalausgänge der Hall-Sensoren 21, 22a sind über einen zweiten Messverstärker 27 mit einem zweiten Eingang des Analog-Digital-Konverters 17 verbunden. Der Ausgang des Analog-Digital-Konverters 17 ist zum Verarbeiten der Messsignale 21'. 22' der Hall-Sensoren 21, 22a mit dem Mikrocontroller 2 verbunden.

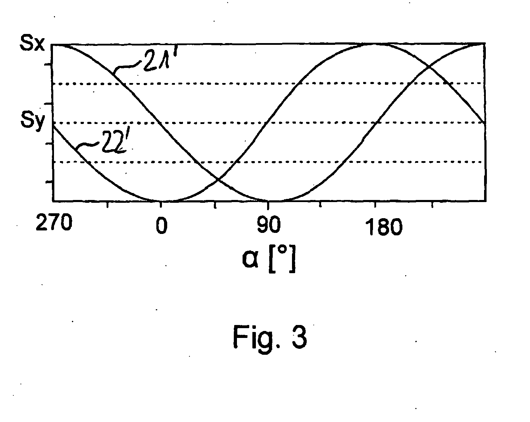

In Fig. 3 sind die Messsignale 21', 22' der Hall-Sensoren 21, 22a graphisch dargestellt Deutlich ist erkennbar, dass die Messsignale 21', 22' jeweils einen sinusförmigen Verlauf aufweisen und dass die Messsignale 21', 22' um einen Phasenwinkel von 90° zueinander phasenverschoben sind Mit Hilfe der Messsignale 21' 22' und im Speicher 7 abgelegter Kenngrößen für die Lage der Hall-Sensoren 21, 22a relativ zum Primärteil wird mittels des Mikrocontrollers 2 die Lage des Sekundärteils relativ zum Primärteil in Echtzeit ermittelt im Speicher 6 ist dazu ein geeignetes Betriebsprogramm für den Mikroprozessor 6 abgelegt Bei Bedarf kann das Betriebsprogramm auch Programmteile zur Regelung der Lage, der Geschwindigkeit und/oder des Drehmoments des Elektromotors 4 umfassen. Die Regelung des Drehmoments erfolgt in Abhängigkeit von Strommesswerten für den Wicklungsstrom des Elektromotors 4, die über den dritten elektrischen Anschluss 15 und den Analog-Digital-Konverter 17 in den Mikrocontroller 2 eingelesen werden.

In Abhängigkeit von den Messsignalen 21', 22' und Sollwerten für Lage, Geschwindigkeit und/oder Drehmoment des Elektromotors 4 wird in einem Betriebsmodus der integrierten Schaltung 1 die Wicklung des Elektromotors 4 mittels der Vorstufe 3 und der Halbbrücken 13 in an sich bekannter Weise bestromt.

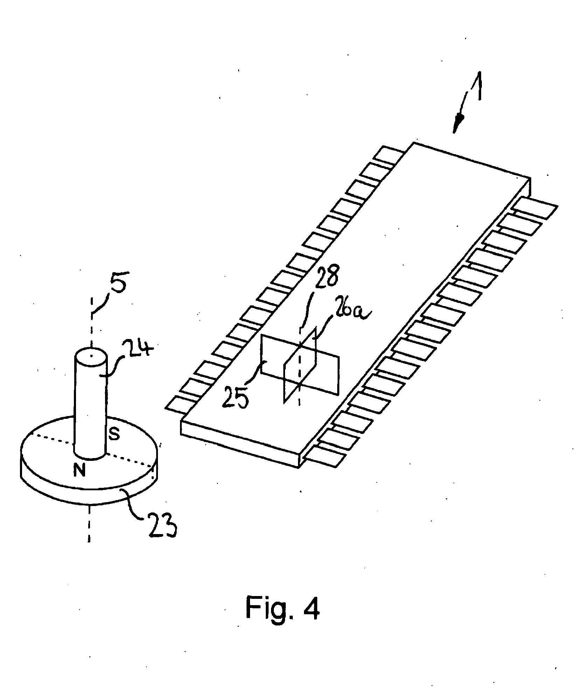

Bei dem in Fig. 4 gezeigten Ausführungsbeispiel entspricht die Integrierte Schaltung 1 im Wesentlichen der in Fig. 2. Lediglich die Ausrichtung der vertikalen Ebenen 25, 26a ist anders. Die Rotationsachse 5 des Elektromotors ist nicht in der Schnittlinie 28 der Ebenen 25 der Hall-Sensoren 21, 22a angeordnet sondern parallel dazu beabstandet. Dadurch kann der Rundmagnet 23 seitlich neben der integrierten Schaltung 1 angeordnet sein.

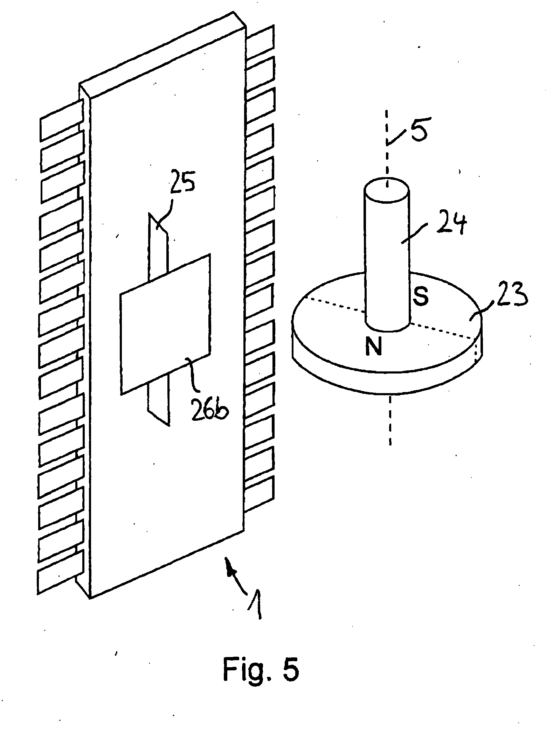

Bei dem in Fig. 5 gezeigten Ausführungsbeispiel weist die integrierte Schaltung 1 einen vertikalen Hall-Sensoren 21 und einen horizontalen Hall-Sensor 22b auf. Die Erstreckungs-Ebene 25 des vertikalen Hall-Sensors 21 verläuft normal und die Erstreckungs-Ebene 26b des horizontalen Hall-Sensors 22b parallel zur Chipebene des Halbleitersubstrats.

Die integrierte Schaltung 1 ist mit ihrer Chipebene parallel zur Rotationsachse 5 des Sekundärteils angeordnet und in radialer Richtung von dieser beabstandet. Die die Magnetpole aufweisende Mantelfläche des Rundmagneten 23 ist der Chipebene der integrierten Schaltung 1 zugewandt.

Die integrierte Schaltung 1 hat in der Zeichnung nicht näher dargestellte, verstellbare Abgleichmittel, mit deren Hilfe die Empfindlichkeit der Hall-Sensoren 21, 22a, 22b und die Offsets deren Messsignale einstellbar sind. Die Abgleichmlttel stehen mit dem Mikrocontroller 2 in Steuerverbindung. Sie können beispielsweise in den Messverstärker 27 integriert sein.

Im Speicher 7 sind für unterschiedliche Betriebstemperaturen Referenzwerte für die Messsignale abgelegt. Zur Messung der Betriebstemperatur hat die integrierte Schaltung 1 einen in der Zeichnung nicht näher dargestellten Temperatursensor, der zum Einlesen von Temperaturmesswerten mit dem Mikrocontroller 2 verbunden ist.

Der Mikrocontroller 2 ist durch Übermitteln eines Befehls über den Bus 11 zum ersten elektrischen Anschluss 10 vom normalen Betriebsmodus in einen Abgleichmodus umschaltbar. im Abgleichmodus wird der Elektromotor 4 mit Hilfe des Mikrocontrollers 2 in mindestens eine den Referenzwerten zugeordnete, vorbestimmte Referenzposition gebracht. Die Referenzposition kann beispielsweise durch einen Anschlag vorgegeben sein, gegen den der Elektromotor 4 positioniert wird. Dann wird aus dem Temperatursensor ein Temperaturmesswert in den Mikrocontroller 2 eingelesen und es werden die dem Temperaturmesswert zugeordneten Referenzwerte aus dem Speicher 7 in den Mikrocontroller 2 übertragen.

Nun werden die Abgleichmittel mit Hilfe des Mikrocontrollers 2 derart eingestellt, dass die an den Messsignolausgängen der Hall-Sensoren 21, 22a, 22b anliegenden Messsignale möglichst gut mit den Referenzwerten übereinstimmen.

Nachdem der Mikrocontroller 2 vom Abgleichmodus in den normalen Betriebsmodus zurückgeschaltet wurde, werden die Abgleichmittel mit den zuvor vorgenommenen Einstellungen betrieben.

## Patentansprüche

1. Integrierte Schaltung (1) zum Ansteuern eines Elektromotors (4), der ein eine Wicklung aufweisendes Primärteil und ein relativ dazu bewegbares, über einen Luftspalt damit zusammenwirkendes permanentmagnetisches Sekundärtell aufweist, mit einem Halbleitersubstrat, in das ein Mikrocontroller (2) und/oder eine Vorstufe (3) zum Ansteuern der Wicklung des Elektromotors (4) integriert ist, **dadurch gekennzeichnet dass** zur Erfassung der Lage des permanentmagnetischen Sekundärteils in das Halbleitersubstrat mindestens zwei mit ihren Messachsen quer zueinander angeordnete Magnetfeidsensoren integriert sind.

2. Integrierte Schaltung (1) nach Anspruch 1, **dadurch gekennzeichnet, dass** die Magnetfeldsensoren vertikale oder schräge Hallsensoren (21, 22a) sind.

3. Integrierte Schaltung (1) nach Anspruch 1 oder 2, **dadurch gekennzeichnet, dass** mindestens ein Magnetfeldsensor ein vertikaler oder schräger Hallsensor (21) und wenigstens ein weiterer Magnetfeldsensor ein horizontaler Hallsensor (22b) ist.

4. Integrierte Schaltung (1) nach einem der Ansprüche 1 bis 3, **dadurch gekennzeichnet, dass** benachbart zu mindestens einem Magnetfeldsensor auf und/oder im Halbleitersubstrat Ablenkmittel für den magnetischen Fluss des permanentmagnetischen Sekundärteils vorgesehen sind.

5. Integrierte Schaltung (1) nach einem der Ansprüche 1 bis 4, **dadurch gekennzeichnet, dass** der Mikrocontroller (2) einen Lageregler, einen Geschwindigkeitsregier und/oder einen Drehmomentregler enthält

6. Integrierte Schaltung (1) nach einem der Ansprüche 1 bis 5, **dadurch gekennzeichnet, dass** der Mikrocontroller (2) mit Messsignalausgängen der Magnetfeldsensoren (21, 22a, 22b) verbundene Eingänge aufweist, dass der Mikrocontroller (2) zum Erzeugen einer der Anzahl der Magnetfeldsensoren (21, 22a, 22b) entsprechenden Anzahl, zueinander phasenverschobener vorzugsweise sinusförmiger Signale ausgebildet ist und dass der Mikrocontroller (2) zum Einstellen der Phasenlage dieser Signale einen Datenspelcher aufweist, in dem Stützstellen abgelegt sind, die jeweils für jeden Magnetfeldsensor (21, 22a, 22b) mindestens einen Messsignalwert einem Wert für die Phasenlage der Signale zuordnen.

7. Integrierte Schaltung (1) nach einem der Ansprüche 1 bis 6, **dadurch gekennzeichnet, dass** sie verstellbare Abgleichmittel für die Magnetfeldsensoren aufweist, dass der Mikrocontroller einen Referenzwertspeicher aufweist, in dem Referenzwerte für die Messsignale abgelegt sind, dass der Mikrocontroller in einen Betriebsmodus und einen Abgleichmodus bringbar ist, dass im Abgleichmodus der Elektromotor mit Hilfe des Mikrocontrollers in mindestens eine den Referenzwerten zugeordnete Referenzposition bringbar ist, und dass im Abgleichmodus die Abgleichmittel derart mit dem Mikrocontroller in Steuerverbindung stehen, dass die an den Messsignalausgängen der Magnetfeldsensoren (21, 22a, 22b) anliegenden Messsignale im Wesentlichen mit den Referenzwerten übereinstimmen.

8. Integrierte Schaltung (1) nach einem der Ansprüche 1 bis 7, **dadurch gekennzeichnet, dass** die Abgleichmittel Mittel zum Einstellen der Empfindlichkeit der Magnetfeldsensoren und/oder eines Offsets der Messsignale der Magnetfeldsensoren aufweist.

9. Integrierte Schaltung (1) nach einem der Ansprüche 1 bis 8, **dadurch gekennzeichnet, dass** im Referenzwertspeicher Referenzwerte für unterschiedliche Störgrößenwerte, insbesondere Temperaturwerte, abgelegt sind, dass die integrierte Schaltung mindestens einen Sensor zur Erfassung eines Störgrößenmesswerts aufweist, und dass der Sensor derart mit dem Referenzwertspelcher und/oder dem Mikrocontroller verbunden ist, dass im Abgleichmodus die Messsignale der Magnetfeldsensoren (21, 22a, 22b) mit den dem betreffenden Störgrößenmesswert zugeordneten Referenzwerten abgleichbar sind.

10. Elektrischer Antrieb mit einer integrierten Schaltung (1) nach einem der Ansprüche 1 bis 4 und einem Elektromotor (4), der ein eine Wicklung aufweisendes Primärteil und ein über einen luftspalt damit zusammenwirkendes, relativ zu dem Primärteil um eine Rotationsachse verdrehbares permanentmagnetisches Sekundärteil aufweist, **dadurch gekennzeichnet, dass** die integrierte Schaltung (1) mit ihrer Chipebene quer und vorzugsweise normal zur Rotationsachse (5) des Sekundärteils angeordnet ist.

11. Elektrischer Antrieb nach Anspruch 10, **dadurch gekennzeichnet, dass** sich ein erster Hallsensor (21) in einer ersten Ebene (25) und ein zweiter Hallsensor (22a, 22b) in einer quer dazu verlaufenden zweiten Ebene (26a, 26b) erstreckt, und dass die Rotationsachse in der Schnittlinie (28) der Ebenen (25, 26a, 26b) der Hallsensoren (21, 22a, 22b) oder der geraden Verlängerung der Schnittlinie (28) angeordnet ist.

12. Elektrischer Antrieb nach Anspruch 10, **dadurch gekennzeichnet, dass** sich ein erster Hallsensor (21) in einer ersten Ebene (25) und ein zweiter Hallsensor (22a, 22b) in einer quer dazu verlaufenden zweiten Ebene (26a, 26b) erstreckt, und dass die Rotationsachse (5) parallel zu der Schnittlinie (28) der Ebenen (21, 26a, 26b) der Hallsensoren (21, 22a, 22b) oder der geraden Verlängerung der Schnittlinie (28) angeordnet ist.

13. Elektrischer Antrieb mit einer integrierten Schaltung (1) nach einem der Ansprüche 1 bis 9 und einem Elektromotor (4), der ein eine Wicklung aufweisendes Primärteil und ein über einen Luftspalt damit zusammenwirkendes, relativ zu dem Primärteil um eine Rotationsachse verdrehbares permanentmagnetisches Sekundärteil aufweist, **dadurch gekennzeichnet, dass** die integrierte Schaltung (1) mit ihrer Chipebene parallel zur Rotationsachse (5) des Sekundärteils angeordnet ist.

14. Elektrischer Antrieb nach einem der Ansprüche 10 bis 13, **dadurch gekennzeichnet, dass** das permanentmagnetische Primärteil mehrere, in Bewegungsrichtung der Relativbewegung zwischen Primär- und Sekundärtell zueinander versetzte erste permanentmagnetische Pole aufweist, und dass das Primärteil mit einem Magnetrad in Antriebsverbindung steht, das in Umfangsrichtung zueinander versetzte zweite permanentmagnetische Pole aufweist, die mit den Magnetfeldsensoren (21, 22a, 22b) magnetisch zusammenwirken.

15. Elektrischer Antrieb nach einem der Ansprüche 10 bis 14, **dadurch gekennzeichnet, dass** das Primärteil mit einem Zahnrad in Antriebsverbindung steht, das derart im magnetischen Fluss eines Magneten angeordnet ist, dass der magnetischen Fluss durch die Zähne des Zahnrads und die Magnetfeldsensoren (21,22a, 22b) verläuft.

## Claims

1. Integrated circuit (1) for driving an electric motor (4), which has a primary part having a winding and a permanent-magnetic secondary part, which can be moved relative to said primary part and interacts therewith via an air gap, comprising a semiconductor substrate, into which is integrated a microcontroller (2) and/or an input stage (3) for driving the winding of the electric motor (4), **characterized in that**, in order to detect the position of the permanent-magnetic secondary part, at least two magnetic field sensors arranged with their measurement axes transversely with respect to one another are integrated into the semiconductor substrate.

2. Integrated circuit (1) according to Claim 1, **characterized in that** the magnetic field sensors are vertical or oblique Hall sensors (21, 22a).

3. Integrated circuit (1) according to Claim 1 or 2, **characterized in that** at least one magnetic field sensor is a vertical or oblique Hall sensor (21) and at least one further magnetic field sensor is a horizontal Hall sensor (22b).

4. Integrated circuit (1) according to any of Claims 1 to 3, **characterized in that** deflection means for the magnetic flux of the permanent-magnetic secondary part are provided adjacent to at least one magnetic field sensor on and/or in the semiconductor substrate.

5. Integrated circuit (1) according to any of Claims 1 to 4, **characterized in that** the microcontroller (2) contains a position controller, a speed controller and/or a torque controller.

6. Integrated circuit (1) according to any of Claims 1 to 5, **characterized in that** the microcontroller (2) has inputs connected to measurement signal outputs of the magnetic field sensors (21, 22a, 22b), **in that** the microcontroller (2) is designed to generate a number of mutually phase-shifted, preferably sinusoidal, signals corresponding to the number of magnetic field sensors (21, 22a, 22b), and **in that** the microcontroller (2) has, for setting the phase angle of said signals, a data memory in which are stored support points which in each case assign at least one measurement signal value to a value for the phase angle of the signals for each magnetic field sensor (21, 22a, 22b).

7. Integrated circuit (1) according to any of Claims 1 to 6, **characterized in that** it has variable adjustment means for the magnetic field sensors, **in that** the microcontroller has a reference value memory, in which reference values for the measurement signals are stored, **in that** the microcontroller can be brought into an operating mode and an adjustment mode, **in that**, in the adjustment mode, with the aid of the microcontroller, the electric motor can be brought into at least one reference position assigned to the reference values, and **in that**, in the adjustment mode, the adjustment means are control-connected to the microcontroller in such a way that the measurement signals present at the measurement signal outputs of the magnetic field sensors (21, 22a, 22b) substantially correspond to the reference values.

8. Integrated circuit (1) according to any of Claims 1 to 7, **characterized in that** the adjustment means have means for setting the sensitivity of the magnetic field sensors and/or an offset of the measurement signals of the magnetic field sensors.

9. Integrated circuit (1) according to any of Claims 1 to 8, **characterized in that** reference values for different disturbance variable values, in particular temperature values, are stored in the reference value memory, **in that** the integrated circuit has at least one sensor for detecting a disturbance variable measurement value, and **in that** the sensor is connected to the reference value memory and/or the microcontroller in such a way that, in the adjustment mode, the measurement signals of the magnetic field sensors (21, 22a, 22b) can be adjusted with the reference values assigned to the relevant disturbance variable measurement value.

10. Electric drive comprising an integrated circuit (1) according to any of Claims 1 to 4 and an electric motor (4), which has a primary part having a winding and a permanent-magnetic secondary part, which interacts with said primary part via an air gap and can be rotated relative to the primary part about a rotation axis, **characterized in that** the integrated circuit (1) is arranged with its chip plane transversely and preferably perpendicularly with respect to the rotation axis (5) of the secondary part.

11. Electric drive according to Claim 10, **characterized in that** a first Hall sensor (21) extends in a first plane (25) and a second Hall sensor (22a, 22b) extends in a second plane (26a, 26b) running transversely with respect thereto, and **in that** the rotation axis is arranged in the intersection line (28) of the planes (25, 26a, 26b) of the Hall sensors (21, 22a, 22b) or the straight extension of the intersection line (28).

12. Electric drive according to Claim 10, **characterized in that** a first Hall sensor (21) extends in a first plane (25) and a second Hall sensor (22a, 22b) extends in a second plane (26a, 26b) running transversely with respect thereto, and **in that** the rotation axis (5) is arranged parallel to the intersection line (28) of the planes (21, 26a, 26b) of the Hall sensors (21, 22a, 22b) or the straight extension of the intersection line (28).

13. Electric drive comprising an integrated circuit (1) according to any of Claims 1 to 9 and an electric motor (4), which has a primary part having a winding and a permanent-magnetic secondary part, which interacts with said primary part via an air gap and can be rotated relative to the primary part about a rotation axis, **characterized in that** the integrated circuit (1) is arranged with its chip plane parallel to the rotation axis (5) of the secondary part.

14. Electric drive according to any of Claims 10 to 13, **characterized in that** the permanent-magnetic primary part has a plurality of first permanent-magnetic poles that are offset with respect to one another in the movement direction of the relative movement between primary and secondary parts, and **in that** the primary part is drive-connected to a magnetic wheel having second permanent-magnetic poles that are offset with respect to one another in the circumferential direction and interact magnetically with the magnetic field sensors (21, 22a, 22b).

15. Electric drive according to any of Claims 10 to 14, **characterized in that** the primary part is drive-connected to a gearwheel arranged in the magnetic flux of a magnet in such a way that the magnetic flux passes through the teeth of the gearwheel and the magnetic field sensors (21, 22a, 22b).

## Revendications

1. Circuit intégré (1) pour commander un moteur électrique (4) qui présente une partie primaire munie d'un enroulement et une partie secondaire mobile par rapport à celle-ci, à magnétisme permanent et qui interagit avec celle-ci par le biais d'un entrefer, comprenant un substrat en semiconducteur dans lequel est intégré un microcontrôleur (2) et/ou un étage préliminaire (3) pour exciter l'enroulement du moteur électrique (4), **caractérisé en ce que** pour détecter la position de la partie secondaire à magnétisme permanent, au moins deux capteurs de champ magnétique disposés transversalement l'un par rapport à l'autre sont intégrés dans le substrat en semiconducteur.

2. Circuit intégré (1) selon la revendication 1, **caractérisé en ce que** les capteurs de champ magnétique sont des capteurs à effet Hall (21, 22a) verticaux ou inclinés.

3. Circuit intégré (1) selon la revendication 1 ou 2, **caractérisé en ce que** qu'au moins un capteur de champ magnétique est un capteur à effet Hall (21) vertical ou incliné et au moins un autre capteur de champ magnétique est un capteur à effet Hall (22b) horizontal.

4. Circuit intégré (1) selon l'une des revendications 1 à 3, **caractérisé en ce que** des moyens de déviation du flux magnétique de la partie secondaire à magnétisme permanent sont prévus à côté d'au moins un capteur de champ magnétique sur et/ou dans le substrat en semiconducteur.

5. Circuit intégré (1) selon l'une des revendications 1 à 4, **caractérisé en ce que** le microcontrôleur (2) contient un régulateur de position, un régulateur de vitesse et/ou un régulateur de couple.

6. Circuit intégré (1) selon l'une des revendications 1 à 5, **caractérisé en ce que** le microcontrôleur (2) présente des entrées reliées avec les sorties de signal de mesure des capteurs de champ magnétique (21, 22a, 22b), que le microcontrôleur (2) est conçu pour générer des signaux déphasés entre eux et de préférence sinusoïdaux dont le nombre correspond au nombre de capteurs de champ magnétique (21, 22a, 22b), et que le microcontrôleur (2), pour régler la phase de ces signaux, présente une mémoire de données dans laquelle sont enregistrés des points de référence qui associent respectivement, pour chaque capteur de champ magnétique (21, 22a, 22b), au moins une valeur de signal de mesure à une valeur de phase des signaux.

7. Circuit intégré (1) selon l'une des revendications 1 à 6, **caractérisé en ce qu'**il présente des moyens de calibrage positionnables pour les capteurs de champ magnétique, que le microcontrôleur présente une mémoire de valeurs de référence dans laquelle sont enregistrées des valeurs de référence pour les signaux de mesure, que le microcontrôleur peut être amené dans un mode de fonctionnement et un mode de calibrage, qu'en mode de calibrage, le moteur électrique peut être amené à l'aide du microcontrôleur dans une position de référence associée à au moins l'une des valeurs de référence, et qu'en mode de calibrage les moyens de calibrage sont en liaison commandée avec le microcontrôleur de telle sorte que les signaux de mesure présents aux sorties de signaux de mesure des capteurs de champ magnétique (21, 22a, 22b) coïncident pour l'essentiel aux valeurs de référence.

8. Circuit intégré (1) selon l'une des revendications 1 à 7, **caractérisé en ce que** les moyens de calibrage présentent des moyens pour régler la sensibilité des capteurs de champ magnétique et/ou un décalage des signaux de mesure des capteurs de champ magnétique.

9. Circuit intégré (1) selon l'une des revendications 1 à 8, **caractérisé en ce que** des valeurs de référence pour différentes valeurs de grandeurs perturbatrices, notamment des valeurs de la température, sont stockées dans la mémoire de valeurs de référence, que le circuit intégré présente au moins un capteur pour détecter une valeur mesurée de grandeur perturbatrice, et que le capteur est relié avec la mémoire de valeurs de référence et/ou avec le microcontrôleur de telle sorte qu'en mode de calibrage, les signaux de mesure des capteurs de champ magnétique (21, 22a, 22b) peuvent être calibrés avec les valeurs de référence associées à la valeur mesurée de grandeur perturbatrice concernée.

10. Mécanisme d'entraînement électrique muni d'un circuit intégré (1) selon l'une des revendications 1 à 4 et d'un moteur électrique (4) qui présente une partie primaire munie d'un enroulement et une partie secondaire à magnétisme permanent qui peut tourner par rapport à la partie primaire autour d'un axe de rotation et qui interagit avec celle-ci par le biais d'un entrefer, **caractérisé en ce que** le circuit intégré (1) est disposé avec son plan de puce transversalement et de préférence perpendiculairement par rapport à l'axe de rotation (5) de la partie secondaire.

11. Mécanisme d'entraînement électrique selon la revendication 10, **caractérisé en ce qu'**un premier capteur à effet Hall (21) s'étend dans un premier plan (25) et un deuxième capteur à effet Hall (22a, 22b) s'étend dans un deuxième plan (26a, 26b) transversalement par rapport à celui-ci, et que l'axe de rotation est disposé dans la ligne d'intersection (28) des plans (25, 26a, 26b) des capteurs à effet Hall (21, 22a, 22b) ou de la prolongation droite de la ligne d'intersection (28).

12. Mécanisme d'entraînement électrique selon la revendication 10, **caractérisé en ce qu'**un premier capteur à effet Hall (21) s'étend dans un premier plan (25) et un deuxième capteur à effet Hall (22a, 22b) s'étend dans un deuxième plan (26a, 26b) transversalement par rapport à celui-ci, et que l'axe de rotation (5) est disposé parallèlement à la ligne d'intersection (28) des plans (21, 26a, 26b) des capteurs à effet Hall (21, 22a, 22b) ou de la prolongation droite de la ligne d'intersection (28).

13. Mécanisme d'entraînement électrique muni d'un circuit intégré (1) selon l'une des revendications 1 à 9 et d'un moteur électrique (4) qui présente une partie primaire munie d'un enroulement et une partie secondaire à magnétisme permanent qui peut tourner par rapport à la partie primaire autour d'un axe de rotation et qui interagit avec celle-ci par le biais d'un entrefer, **caractérisé en ce que** le circuit intégré (1) est disposé avec son plan de puce parallèlement à l'axe de rotation (5) de la partie secondaire.

14. Mécanisme d'entraînement électrique selon l'une des revendications 10 à 13, **caractérisé en ce que** la partie primaire à magnétisme permanent présente plusieurs premiers pôles à magnétisme permanent décalés les uns par rapport aux autres dans le sens du mouvement du mouvement relatif entre la partie primaire et la partie secondaire, et que la partie primaire est en liaison motrice avec une roue magnétique qui présente dans le sens du pourtour des deuxièmes pôles à magnétisme permanent décalés les uns par rapport aux autres, lesquels interagissent magnétiquement avec les capteurs de champ magnétique (21, 22a, 22b).

15. Mécanisme d'entraînement électrique selon l'une des revendications 10 à 14, **caractérisé en ce que** la partie primaire est en liaison motrice avec une roue dentée qui est disposée dans le flux magnétique d'un aimant de telle sorte que le flux magnétique passe à travers les dents de la roue dentée et les capteurs de champ magnétique (21, 22a, 22b).
